Europäisches Patentamt

European Patent Office

Office européen des brevets

(11) Veröffentlichungsnummer: **0 420 984 A1**

## (12) EUROPÄISCHE PATENTANMELDUNG
### veröffentlicht nach Art. 158 Abs. 3 EPÜ

(21) Anmeldenummer: 90901085.2

(22) Anmeldetag: **18.12.89**

(86) Internationale Anmeldenummer: **PCT/SU89/00318**

(87) Internationale Veröffentlichungsnummer: **WO 90/07365 (12.07.90 90/16)**

(51) Int. Cl.⁵: **A63J 23/02**

(30) Priorität: **02.01.89 SU 4625330**

(43) Veröffentlichungstag der Anmeldung: **10.04.91 Patentblatt 91/15**

(84) Benannte Vertragsstaaten: **AT CH DE FR GB IT LI SE**

(71) Anmelder: **TEATR POLIFONICHESKOI DRAMY**
**B. Kharitonievsky per., 22-24**
**Moscow, 107078(SU)**

(72) Erfinder: **JUDENICH, Gennady Ivanovich**
**Serpukhovsky val, 13-9**
**Moscow, 113191(SU)**

(74) Vertreter: **Patentanwälte Beetz sen. - Beetz jun. Timpe - Siegfried - Schmitt-Fumian-Mayr**
**Steinsdorfstrasse 10**
**W-8000 München 22(DE)**

(54) **BILDSCHIRMGERÄT.**

(57) Das Bildschirmgerät enthält Schirme (1 bis 10), die mit der Möglichkeit einer räumlichen Verschiebung in verschiedenen Richtungen einzeln oder gruppenweise in beliebiger Anzahl ausgeführt sind und auf einer beliebigen krummlinigen Fläche liegen. Die Schirme (1 bis 10) bilden einen teilweise oder ganz geschlossenen Raum, in dessen Innerem auf einer Plattform (17) ein Simulator (18) angeordnet ist, der mit der Möglichkeit einer Rotation und/oder Verschiebung im Raum in mindestens einer Richtung ausgeführt ist und ein Gehäuse (23) aus einem transparenten Werkstoff aufweist, durch welchen in das Innere des Simulators (18) Informationen von den Schirmen (1 bis 10) kommen.

FIG .1

EP 0 420 984 A1

## BILDSCHIRMGERÄT

Gebiet der Technik

Die Erfindung bezieht sich auf die Mittel zur Bereit-und Darstellung von Informationen und betrifft insbesondere Bildschirmgeräte.

Vorhergehender Stand der Technik

Es sind Bildschimgeräte bekannt, die einen Mehrzellenschirm mit einer Vielzahl von Zellen enthalten. In jeder Zelle oder in einer beliebigen Anzahl von ihnen werden eigene Informationen von einem oder mehreren Projektoren (US, A, 3192827) abgelegt.

Derartige Sichtgeräte können mit einem Theater- oder Konzertaufführung leicht vereinigt werden.

In diesen Sichtgeräten sind die Möglichkeiten einer räumlichen Entwicklung des Bereichs der Informationsdarstellung beschränkt, weshalb in ihnen keine Illusion eines nach der Tiefe hrenzelosen Raumes gemacht werden kann.

Es ist auch ein Bildschormgerät bekannt, das einen Satz von Schirmen enthält, die mit der Möglichkeit einer räumlichen Verschiebung in verschiedenen Richtungen einzeln oder gruppenweise zugleich in beliebiger Anzahl ausgeführt sind.

Die Schirme bilden ein räumlichen veränderliches dreidimensionales Mehrebenen-Schirmsystem (PCT SU/87/00046).

Derartiges Sichtgerät weist einen kleinen Anwendungsbereich hauptsächlich bei Bühnen- und Schauunternehmungen auf. Sie können nicht zur Darstellung von Informationen eingesetzt werden, die zur Durchführung von Dauerprüfungen mit dem Effekt einer Illusion der Wirklichkeit benötigt werden.

Offenbarung der Erfindung

Der Erfindung liegt die Aufgabe zugrunde, ein Bildschirmgerät zu schaffen, das es gestattet, eine Illusion der Wirklichkeit im Raum bei der Durchführung von Dauerprüfungen zu schaffen.

Diese Aufgabe wird dadurch gelöst, dass in dem Bildschirmgerät, Welches Schirme enthält, die mit der Möglichkeit einer räumlichen Verschiebung in verschiedenen Richtungen einzeln oder gruppenweise in beliebiger Anzahl ausgeführt sind, gemäss der Erfindung die auf einer beliebigen krummlinigen Fläche liegenden Schirme einen teilweise oder ganz geschlossenen Raum bilden, in dessen Innerem auf einer Plattform ein Simulator angeordnet ist, der mit der Möglichkeit einer Rotation und/oder Verschiebung im Raum in mindestens einer Richtung ausgeführt ist und ein Gehäuse aus einem transparenten Werkstoff aufweist, durch welchen in das Innere des Simulators Informationen von den Schirmen für den zu Prüfenden kommen.

Als Simulator kann eine schallisolierte Unterdruckkammer oder eine Zentrifuge auftreten.

Das erfindungsgemässe Bildschirmgerät erlaubt es, die Bedingungen für Prüfungen und Unterricht grundlegend zu ändern, indem Informationen in ausreichendem Masse geliefert werden, die die Illusion einer den zu Prüfenden oder Auszubildenden umgebenden realen Wirklichkeit machen, sowie die technologischen Möglichkeiten sowohl des Sichgeräts als auch von Prüf- und Lehrmitteln zugleich zu erweitern. Diese Möglichkeiten entstehen im Zusammenhang damit, dass die sich im Raum in beliebiger Richtung verschiebenden Schirme in der Lage sind, einen praktisch unbegrenzt grossen Umfang erforderlicher Informationen zu tragen, um eine Illusion der Wirklichkeit zu machen.

Kurzbeschreibung der Zeichnungen

Die Erfindung soll durch die nachstehende Beschreibung von Ausführungsbeispielen anhand der beiliegenden Zeichnungen näher erläutert werden. Es zeigen:

Fig. 1 eine Gesamtansicht eines erfindungsgemässen Bildschirmgeräts mit einer schallisolierten Unterdruckkammer;

Fig. 2 eine andere Ausführungsform des gleichen Sichtgeräts;

Fig. 3 das gleich Sichtgerät mit einer rotierenden schallisolierten Unterdruckkammer;

Fig. 4 das gleiche Sichtgerät wie in Fig. 3 mit einem Simulator;

Fig. 5 ein Bildschirmgerät in Form einer Hemisphäre mit einem Simulator;

Fig. 6 ein Bildschirmgerät in Form einer Hemisphäre mit einer schallisolierten Unterdruckkammer;

Fig. 7 ein Bildschirmgerät in Form einer Hemisphäre mit einer Zentrifuge.

Die beste Ausführungsvariante der Erfindung

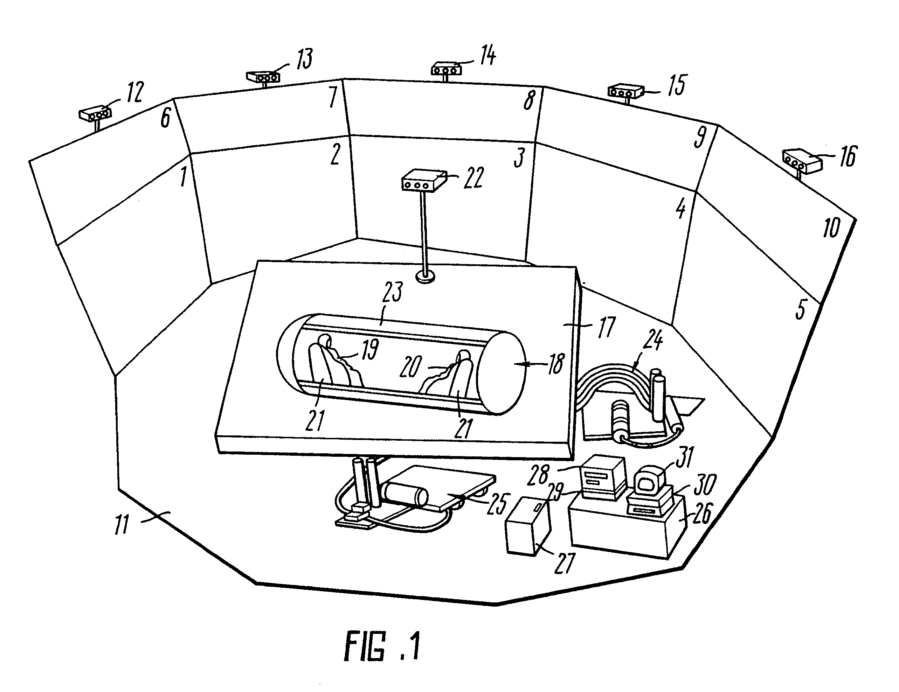

Das erfindungsgemässe Bildschirmgerät enthält einen Satz von Schirmen 1 (Fig. 1), 2,3,4,5 und 6,7,8,9,10, die auf einem Fundament 11 dreh- und/oder verschiebbar angeordnet sind. So sind die oberen Schirme 6 bis 10 gegen die Schirme 1 bis 5 geneigt. Um die Schirme 1 bis 10 herum sind Projektoren 12,13,14,15 und 16 (Filmvorführ-oder Bildschirmgeräte) angeordnet, die die Informationen in Form von Durchprojektionen auf die Schirme 1 bis 10 tragen. Die Schirme 1 bis 10 sind in der Weise angeordnet, dass sie einen z.T.ggeschlossenen Raum bilden und deren Grundlinien eine gebrochene Kurve bilden. Innerhalb des durch die Schirme 1 bis 10 gebildeten Raumes ist auf einer Plattform 17 ein Simulator, insbesondere eine schallisolierte Unterdruckkammer 18 mit in Sesseln 21 sitzenden zu Prüfenden 19 und 20, montiert. Auf der Plattform 17 ist noch ein Projektor 22 installiert, von dem die Informationen direkt in der schallisolierten Unterdruckkammer 18 einlaufen.

Das Gehäuse 23 der schallisolierten Unterdruckkammer 18 ist aus einem transparenten Werkstoff hergesstellt, und die zu Prüfenden 19 und 20 beobachten sämtliche Informationen, die von den Projektoren 12 bis 16, 22 so auf die Schirme 1 bis 10 wie auch auf die schallisclierte Unterdruckkammer 18 auftreffen.

Die Schallisolierte Unterdruckkammer 18 ist räumlich dreh- und/oder verschiebbar in mindestens einer Richtung angeordnet, was die Möglichkeiten der Erhaltung von Informationen durch die zu Prüfenden 19 und 20 noch mehr erweitert. Zu diesem Zweck sind auf dem Fundament 11 eine Drehvorrichtung 24 für die Plattform 17 samt der schallisolierten Unterdruckkammer 18 und eine Verschiebevorrichtung 25 für die Plattform 17 angeordnet. Auf dem Fundament 11 ist auch ein Steuerpult 26 für das gesamte Sichtgerät angeordnet, das einen Steuersignalgenerator 27, einen Zähler 28, einen Dechiffrator 29 und ein Beobachtungsgerät 30 mit einem Monitor 31 aufweist.

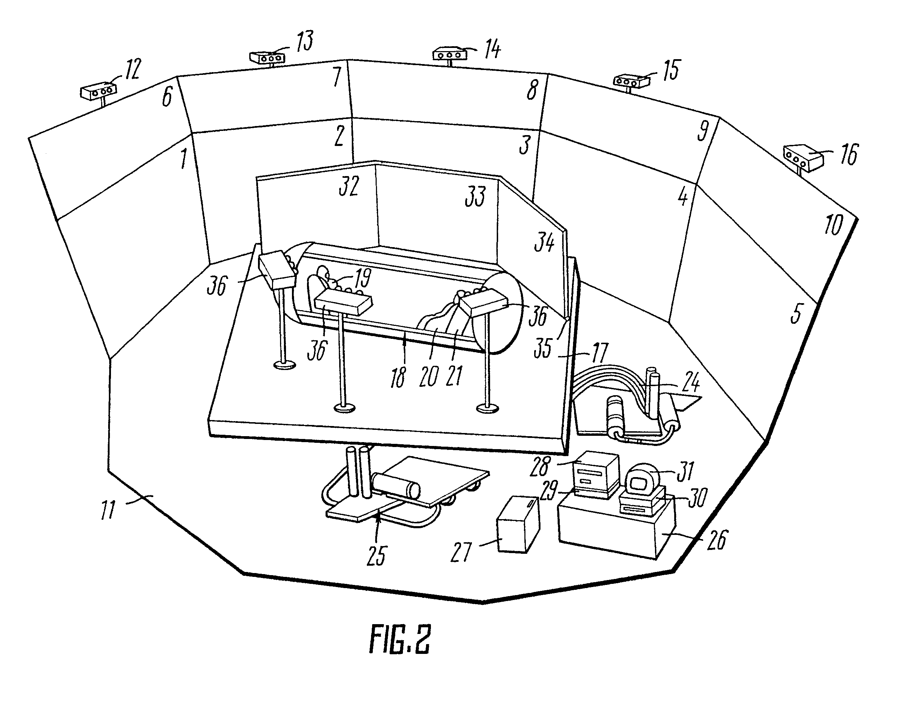

In Fig. 2 ist gezeigt, wie die Menge von die zu Prüfenden 19 und 20 erreichenden Informationen vergrössert werden kann. Zu die sem Zweck weist das Sichtgerät zusätzlich bewegliche Schirme 32,33,34 auf, die in Führungen 35 auf der Plattform 17 angeordnet sind. Auf die Schirme 32 bis 34 treffen die Informationen von auch auf der Plattform 17 aufgestellten Projektoren 36 auf.

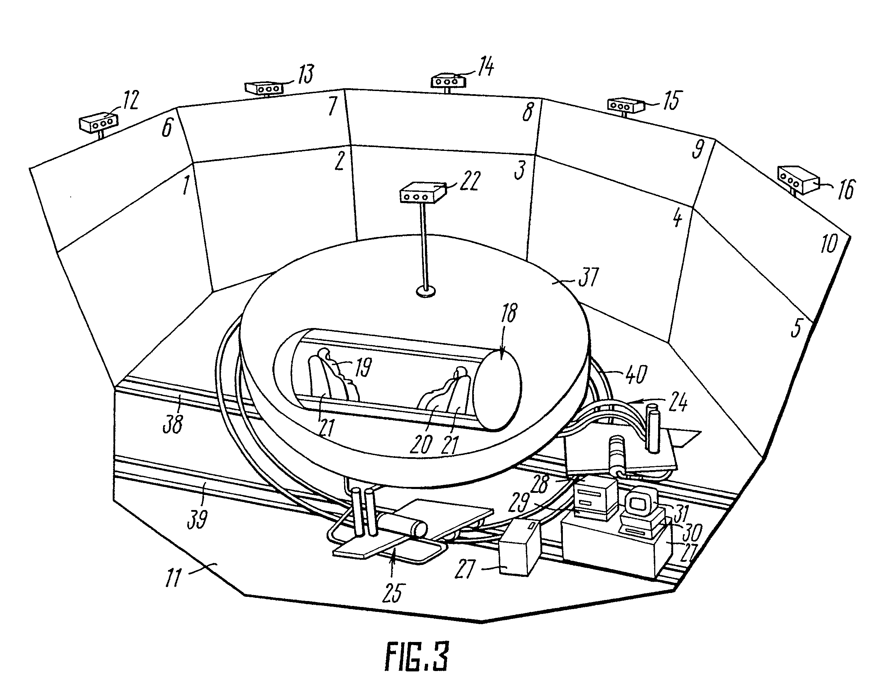

Bei dem in Fig. 3 dargestellten Sichtgerät befindet sich die schallisolierte Unterdruckkammer 18 auf einer runden Plattform 3 ausserdem sind in Fig. 3 Führungen 38 und 39 in Form von Schienen auf denen die schallisolierte Unterdruckkammer 18 eine lineare Verschiebung mit Hilfe der Vorrichtung 25 ausführt, und eine Führung 40 in Form von Schienen, auf denen die Schallisolierte Unterdruckkammer 18 eine Drehbewegung mittels der Vorrichtung 24 ausführt, angedeutet.

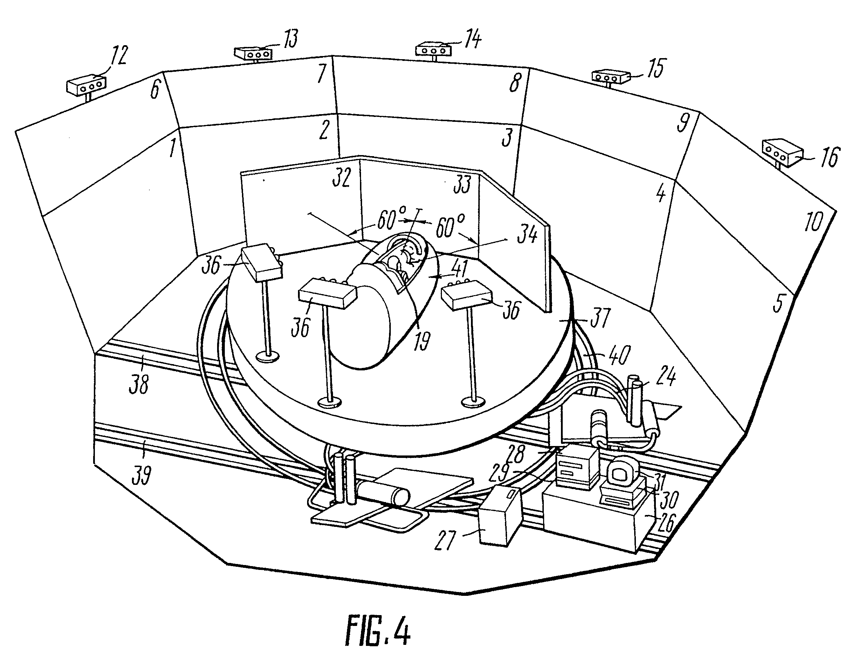

In Fig. 4 ist ein Sichtgerät wiedergegeben, in dessen geschlossenem Raum ein Simulator 41 beispielsweise für die Unterweisung von Autofahrern, Fliegern, Kosmonauten untergebracht ist. Der Simulator 41 weist ein durchsichtiges Gehäuse auf und steht auf der runden Plattform 37. Im übrigen ist das Sichtgerät in Analogie zu dem in Fig. 3 dargestellten ausgeführt.

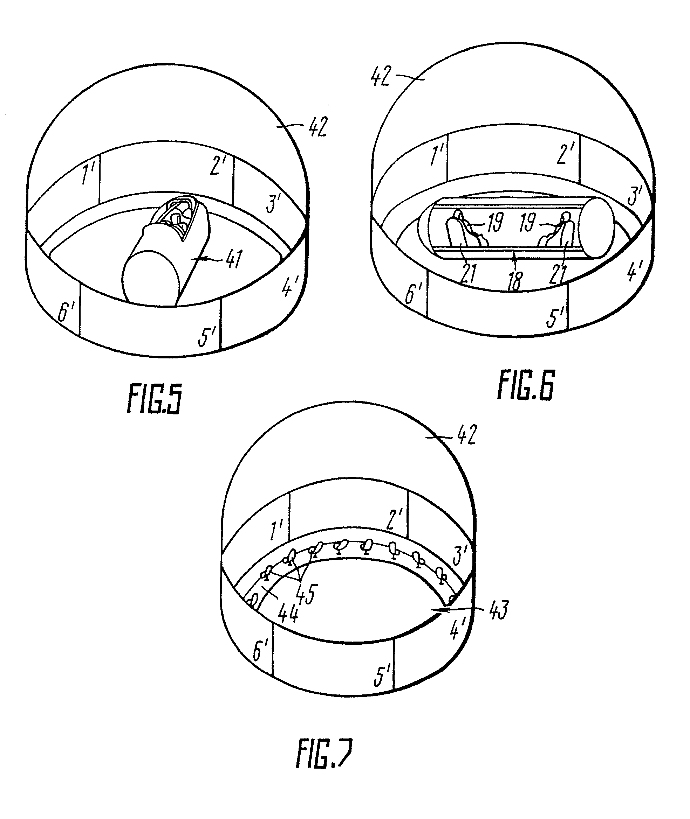

Es sind auch andere Ausführungsformen cvon Schirmen 1' (Fig. 6), 2',3',4',6' möglich, wo sie im Kreis aufgestellt sind; ausser diesen Schirmen 1' bis 6' weist das Sichtgerät einen eine Kuppel dasstellenden hemisphärischen oberen Schirm 42 auf, und auf solche Weise bildet sich ein geschlossener Raum zylindrischer Form mit einer sphärischen Kuppel. Innerhalb dieses Raumes befinden sich entweder der Simulator 41 (Fig. 5) oder die schallisolierte Unterdruckkammer 18 (Fig. 6), oder eine Zentrifuge 43 (Fig. 7).

Die Zentrifuge 43 kann in Form einer rotierenden Plattform 44 mit an deren Umfang aufgestellten Sesseln 45 dargestellt werden.

Das Bilschirmgerät arbeitet wie folgt.

Die zu Prüfenden 19 und 20 lassen sich in den Sesseln 21 der schallisolierten Unterdruckkammer 18 nieder, die sich während der Prüfungen dreht und auf den Führungen 40,38,39 entsprechend dem eingegebenen Programm bewegt. Gleichzeitig laufen von den Projektoren 12 bis 16 und 22 (bzw. 36) gemäss dem gleichen Programm erforderliche Informationen ein, die die reale Wirklichkeit veranschalichen, die die durchzuführenden Prüfungen begleitet. Beispielsweise werden bei den Prüfungen von Tauchern auf die Schirme 2 bis 6 eine Ansicht von Meerestiefen oder einem Meeresgrund, bei den Prüfungen von Fliegern Abbildungen des Himmelsraumes und der Ende uzw. projiziert.

Derartige Kombination der die reale Umgebung veranschaulich dem Informationen mit der gleichzeitigen Schaffung eines Komplex physischer und seelischer Belastungen erweitert den Effekt der Prüfungen beträchlich, gestattet es, unerwartete Kombinationen von Einwirkungen zu erreichen, d.h. das Programm der durchzuführenden Prüfungen gegenüber den bekannten Prüfständen und anderen ähnlichen Mitteln wesentlich zu komplizieren.

Gewerbliche Anwendbarkeit

Die Erfindung kann zur Ausbildung von Fachkräften im Flugwesen, der Raumfahrt, dem Autofahren und in anderen ähnlichen Berufen, die ein gleichzeitiges Anfallen einer grossen Informationsmenge erfordern, sowie in der Medizin und in Schauspielautomaten angewendet werden.

**Ansprüche**

1. Bildschirmgerät, welches Schirme (1-10) enthält, die mit der Möglichkeit einer räumlichen Verschiebung in verschiedenen Richtungen einzeln oder gruppenweise in beliebiger Anzahl ausgeführt sind, dadurch **gekennzeichnet**, dass die auf einer beliebigen krummlinigen Fläche liegenden Schirme (1 bis 10) einen teilweise oder ganz geschlossenen Raum bilden, in dessen Innerem auf einer Plattform (17) ein Simulator (18 oder 19, oder 20) angeordnet ist, der mit der Möglichkeit einer Rotation im Raum ausgeführt ist und ein Gehäuse (23) aus einem transparenten Werkstoff aufweist, durch welchen in das Innere des Simulators (18 oder 19, oder 20) Informationen von den Schirmen (1 bis 10) für den zu Prüfenden kommen.

2. Bildschirmgerät, welches Schirme (1-10) enthält, die mit der Möglichkeit einer räumlicher Verschiebung in verschiedenen Richtungen einzeln oder gruppenweise in beliebiger Anzahl ausgeführt sind, dadurch **gekennzeichnet**, dass die auf einer beliebigen krummlinigen Fläche liegenden Schirme (1 bis 10) bilden, in dessen Innerem auf einer Plattform (17) ein Simulator (18 oder 19, oder 20) angeordnet ist, der mit der Möglichkeit einer Verschiebung im Raum mindestens in einer Richtung ausgeführt ist und ein Gehäuse (23) aus einem transparenten Werkstoff aufweist, durch welchen in das Innere des Simulators (18 oder 19, oder 20) Informationen von den Schirmen (1 bis 10) für den zu Prüfenden Kommen.

3. Bildschirmgerär, welches Schirme (1-10) enthält, die mit der Möglichkeit einer räumlichen Verschiebung in verschiedenen Richtungen einzeln oder gruppenweise in beliebiger Anzahl ausgeführt sind, dadurch **gekennzeichnet**, dass die auf einer beliebigen krummlinigen Fläche liegenden Schirme (1 bis 10) einen teilweise oder ganz geschlossenen Raum bilden, in dessen Innerem auf einer Plattform (17) ein Simulator (18 oder 19, oder 20) angeordnet ist, der mit der Möglichkeit einer Rotation und Verschiebung im Raum mindestens in einer Richtung ausgeführt ist und ein Gehäuse (23) aus einem transparenten Werkstoff aufweist, durch welchen in das Innere des Simulttors (18 oder 19, oder 20) Informationen von den Schirmen (1 bis 10) für den zu Prüfenden kommen.

4. Bildschirmgerät nach Anspruch 1 oder 2, oder 3, dadurch gekennzeichnet, daß die Schirme ( 1 bis 10) einen teilueisel geschlossenen Raum bilden.

5. Bildschirmgerät nach Anspruch 1 oder 2, oder 3, dadurch **gekennzeichnet**, dass als, Simulator eine schallisolierte Unterdruckkammer (18) auftritt.

6. Bildschirmgerät nach Anspruch 1 oder 2, oder 3, dadurch **gekennzeichnet**, dass als Simulator eine Zentrifuge (43) dient.

FIG .1

FIG.2

FIG.3

EP 0 420 984 A1

FIG.4

FIG.5

FIG.6

FIG.7

# INTERNATIONAL SEARCH REPORT

**I. CLASSIFICATION OF SUBJECT MATTER** (if several classification symbols apply, indicate all)

According to International Patent Classification (IPC) or to both National Classification and IPC

Int. Cl.$^5$    A 63 J   23/02

**II. FIELDS SEARCHED**

Minimum Documentation Searched

| Classification System | Classification Symbols |
|---|---|
| Int. Cl.$^4$ | A 63 J   23/00,   23/02 |

Documentation Searched other than Minimum Documentation
to the Extent that such Documents are Included in the Fields Searched

**III. DOCUMENTS CONSIDERED TO BE RELEVANT**

| Category | Citation of Document, with indication, where appropriate, of the relevant passages | Relevant to Claim No |
|---|---|---|
| A | FR,AI, 2447741 (GUILLON CHRISTIAN), 29 August 1980 (29.08.80), the drawing | I-6 |
| A | FR,AI,2443862 (ROUART ANDREE HENRIETTE ET VERRIER ROBERT CLAUDE), II July 1980 (II.07.80), fig. 1-4 | I-6 |
| A | FR,AI, 2399264 (SOCIETE INDUSTRIELLE DE TRAVAUX ET AMENAGEMENTS MECANIQUES "SITRAM") 02 March 1979 (02.03.79), fig.I | I-6 |
| A | FR,AI,2567035 (CONCORDE ST GEORGE PRODUCTIONS PTY LTD.), 03 July 1985 (03.07.85), fig.4 | I-6 |

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 13 March 1990 (13.03.90) | 02 April 1990 (02.04.90) |

| International Searching Authority | Signature of Authorized Officer |
|---|---|
| ISA/SU | |

Form PCT/ISA/210 (second sheet) (January 1985)